# FASCICULE DE BREVET EUROPEEN

(11) **EP 1 628 061 B1**
(45) Date de publication et mention de la délivrance du brevet: **24.01.2007**
(21) Numéro de dépôt: 05356125.4
(22) Date de dépôt: 19.07.2005
(51) Int. Cl.: F16L 13/00

(54) **Bague de visualisation du sertissage d'un raccord pour tubes**
Ring zur Prüfung der Verpressung eines Rohrpressfittings
Ring for checking the crimping of a pipe press-fitting

(30) Priorité: 29.07.2004 FR 0408393
(43) Date de publication de la demande: 22.02.2006
(73) Titulaire: COMAP, 69007 Lyon (FR)
(72) Inventeur: Le Clinche, Pascal, 69008 Lyon (FR); Dausson, Christian, 45000 Orleans (FR)
(74) Mandataire: Maureau, Philippe

(56) Documents cités:
- WO-A-01/21997
- DE-C- 10 002 916
- DE-U- 29 920 371

## Description

La présente invention concerne une bague de visualisation de sertissage destinée à un raccord pour tubes selon le préambule de la revendication 1.

Une telle bague est connue par le document DE-A-299 20 571.

Lors de l'installation d'un réseau de tubes, l'installateur réalise un assemblage comprenant notamment des tubes et des raccords avec plusieurs phases, successivement d'emboîtement d'un tube et d'un raccord, puis de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis.

La création d'une fuite provoquée au niveau du raccord tant que celui-ci n'est pas serti a notamment été envisagée. Cette approche permet à l'opérateur de détecter les raccords non sertis en mettant l'installation sous pression puis en repérant les fuites, soit visuellement, soit en constatant une pression plus faible que la pression normale dans l'installation, ce qui permet une vérification globale du sertissage des raccords de l'installation. Ces fuites peuvent être provoquées par des joints de forme spécifique, n'assurant pas d'étanchéité avant sertissage, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 995 et WO 01/63160 décrivent deux dispositifs permettant de réaliser de telles fuites provoquées avant sertissage.

Il a également été envisagé d'utiliser des moyens de marquage présents sur chaque raccord sous forme de bague, comme décrit dans les documents WO/01/21997 ou DE 100 02 916. Toutefois, ces bagues se montrent difficiles à détruire lors du sertissage par les outils de sertissage, et produisent des débris qui restent sur le lieu de l'installation, et peuvent encrasser l'outil de sertissage.

Le but de la présente invention est de fournir une solution permettant une visualisation fiable du sertissage, ne laissant pas de débris sur le site de l'installation, en utilisant des mâchoires de sertissage connues.

Un autre but de l'invention est de pouvoir utiliser une telle bague de visualisation sur des raccords de type raccord cuivre. Pour ce type de raccord, le positionnement des mâchoires de sertissage n'est pas réalisé grâce à une bague de positionnement. En effet, ce positionnement est réalisé par la complémentarité de forme entre une gorge de la mâchoire de sertissage et un bourrelet situé sur le raccord à une distance déterminée de l'emboîture, ce bourrelet formant une gorge logeant un joint d'étanchéité.

En conséquence, avec ce mode de positionnement, il n'est pas possible de prévoir une bague destinée à être logée dans une gorge de la mâchoire de sertissage prévue pour une bague de positionnement.

A cet effet, la présente invention porte sur une bague de visualisation du sertissage d'un raccord pour tubes comportant une portion annulaire présentant au moins un évidement laissant apparaître le corps du raccord, ainsi qu'au moins une ailette située en regard d'un évidement, l'ailette comportant une première extrémité reliée à la portion annulaire et située à distance du raccord, et une seconde extrémité située à proximité du corps du raccord, de façon à ce que l'au moins une ailette soit déplacée par l'outil de sertissage lors de l'opération de sertissage du raccord, de façon à obturer au moins partiellement l'évidement correspondant.

Grâce à ces dispositions, l'outil de sertissage exerce une poussée sur l'ailette vers le corps du raccord, l'ailette se logeant dans un évidement, sa seconde extrémité glissant le long du corps du raccord.

De plus, lors du sertissage, la géométrie de cette bague est destinée à être aplatie, lui permettant d'éviter de rompre, même en l'absence de gorge de logement dans la machoire de sertissage en regard de la bague.

Selon une possibilité, les évidements sont ouverts sur un bord de la portion annulaire.

Selon un mode de réalisation, le bord de la portion annulaire sur lequel sont ouverts les évidements forme un ensemble de créneaux avant sertissage.

Après sertissage, les créneaux sont obstrués, ce changement permettant la visualisation.

Selon une autre possibilité, les évidements sont fermés.

Après sertissage, les évidements fermés formant des fenêtres sont obstrués, ce changement permettant la visualisation.

Avantageusement, la première extrémité d'au moins une l'ailette comporte un chanfrein favorisant son déplacement dans une direction donnée par rapport au corps du raccord lors du sertissage.

Selon un mode de réalisation, la seconde extrémité de l'ailette présente un rayon, par rapport à l'axe du raccord, inférieur au rayon du raccord, la bague pouvant être montée en force sur le raccord.

Avantageusement, la bague est réalisée dans un matériau lui permettant de se déformer lors du sertissage de façon à former, au niveau des interstices entre les mâchoires de l'outil de sertissage, des accumulations de matière sous forme d'au moins une languette plate, pouvant être brisée ultérieurement par l'utilisateur afin de d'enlever la bague du raccord.

Selon un mode de réalisation, la bague comporte au moins deux ailettes et deux évidements répartis de façon régulière sur la périphérie de la bague.

Avantageusement, la bague comporte au moins quatre ailettes et quatre évidements correspondants.

La présente invention porte également sur un raccord comportant une bague telle que décrite ci-dessus.

De toute façon, l'invention sera bien comprise à l'aide de la description qui suit, en référence au dessin schématique annexé, représentant à titre d'exemple non limitatif, plusieurs formes de réalisation d'une bague et d'un raccord selon l'invention.

La figure 1 est une vue en coupe de l'emboîture d'un raccord dans laquelle est introduite l'extrémité d'un tube, le raccord portant une bague selon l'invention, selon un premier mode de réalisation, avant sertissage.

La figure 2 est une vue en coupe partielle du raccord de figure 1, après sertissage.

La figure 3 est une vue en perspective de la bague de figure 1, avant sertissage.

La figure 4 est une vue en perspective d'une bague selon l'invention, selon un second mode de réalisation, avant sertissage.

La figure 5 est une vue de côté de la bague de figure 4.

La figure 6 est une vue en coupe de l'emboîture d'un raccord dans laquelle est introduite l'extrémité d'un tube, le raccord portant la bague de figure 4, avant sertissage.

La figure 7 est une vue en perspective d'une bague selon l'invention, selon un troisième mode de réalisation, avant sertissage.

La figure 8 est une vue en coupe de la bague de figure 7, avant sertissage.

La figure 9 est une vue en coupe d'une bague selon l'invention, selon un quatrième mode de réalisation, avant sertissage.

La figure 10 est une vue en perspective partielle schématique de la bague de figure 9 après sertissage.

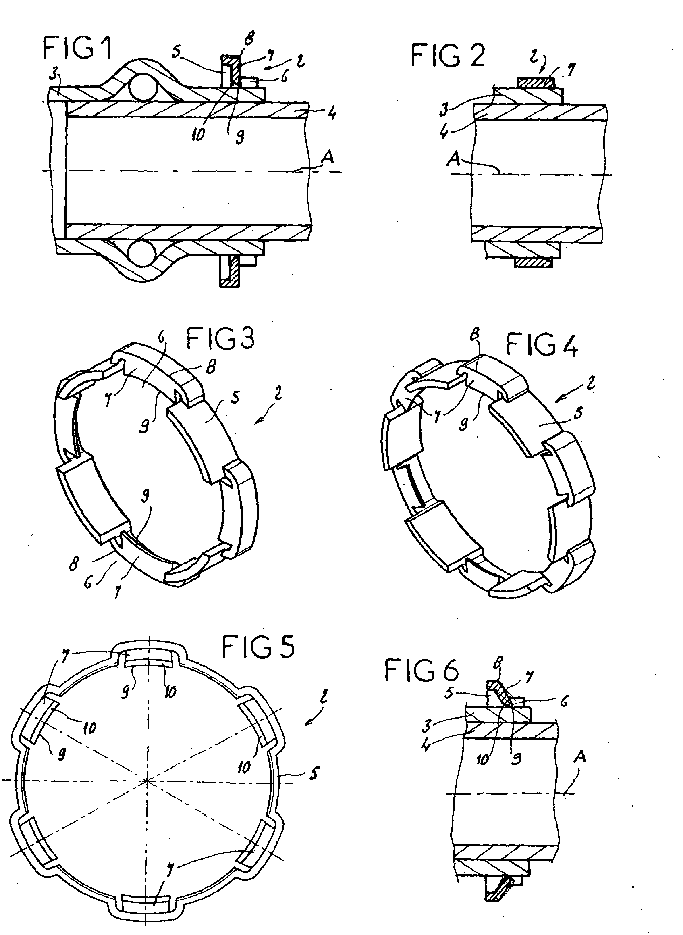

Selon un premier mode de réalisation, représenté sur les figures 1 à 3, une bague 2 de visualisation du sertissage d'un raccord 3 pour tubes 4, comporte une portion annulaire 5 présentant des évidements 6, ouverts sur un bord de la portion annulaire 5. La portion annulaire 5 présente donc, avant sertissage, des créneaux visibles par l'opérateur.

La bague 2 comporte des ailettes 7 dont une première extrémité 8 est reliée à la portion annulaire 5, à distance du raccord et une seconde extrémité 9 est situé à proximité du corps du raccord. Ainsi, lors du sertissage, chaque ailette 7 est déplacée par l'outil de sertissage, qui prend appui au niveau de la première extrémité 8 de l'ailette, au niveau de la liaison avec la portion annulaire 5, et déforme la bague, l'ailette 7 étant déplacée contre le corps du raccord de façon à obturer au moins partiellement un évidement 6 situé en regard.

La seconde extrémité 9 de l'ailette comporte un chanfrein 10 favorisant le déplacement de l'ailette dans une direction donnée, en particulier dans la direction de l'évidement 6.

La bague 2 comporte quatre ailettes 7 et quatre évidements 6 correspondants répartis régulièrement sur la périphérie de la bague de façon à répartir de façon homogène les efforts lors du sertissage et à permettre une visualisation du sertissage quelle que soit l'orientation de la bague 2.

Dans ce mode de réalisation, la partie annulaire 5 présente un rayon intérieur sensiblement égal au rayon extérieur du corps du raccord dans les régions n'étant pas située au niveau de la liaison avec une ailette 7.

Selon un second mode de réalisation représenté sur les figures 4 à 6, une bague 2 selon l'invention comporte les mêmes éléments que dans le premier mode de réalisation. Toutefois, dans ce mode de réalisation, la seconde extrémité 9 de chaque ailette présente un rayon par rapport à l'axe A du raccord inférieur au rayon du raccord. La bague doit ainsi être montée en force sur l'emboîture du raccord 3, ce qui garantit d'une part un maintien en position de la bague sur l'emboîture du raccord, et d'autre part permet d'obtenir une légère inclinaison des ailettes 7 en direction de l'évidement 6, la bague 2 étant introduite sur l'emboîture du raccord 3 par son extrémité opposée aux évidements 6, cette disposition facilitant le déplacement de l'ailette 7 vers l'évidement 6, lors du sertissage.

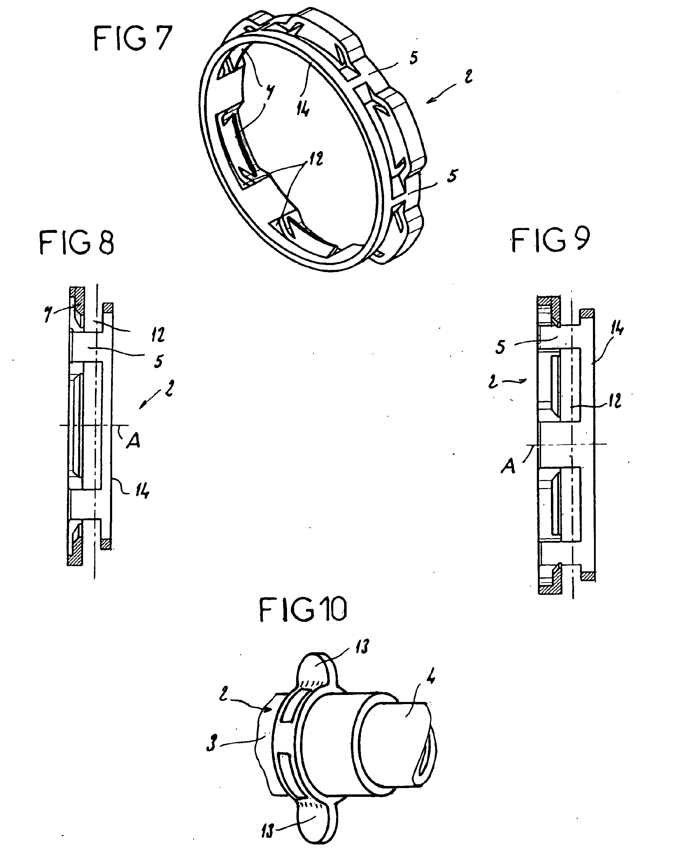

Selon un troisième mode de réalisation, représenté sur les figures 7 et 8, une bague 2 selon l'invention comporte des évidements fermés 12 sur le bord de la portion annulaire opposé à la partie reliée aux ailettes 7. Dans ce mode de réalisation, le sertissage est également visualisé par l'obturation au moins partielle de chaque évidement 12 par une ailette 7. La présence d'évidement fermé permet de constituer un bord continu 14 de diamètre sensiblement égal au diamètre du corps du raccord, renforçant la bague 2.

Dans ce mode de réalisation, la seconde extrémité 9 de chaque ailette 7 présente un rayon par rapport à l'axe A du raccord sensiblement égal au diamètre du raccord 3.

Selon un quatrième mode de réalisation, variante du troisième mode de réalisation, représenté sur les figures 9 et 10, une bague 2 selon l'invention comporte les mêmes éléments que dans le troisième mode de réalisation. Toutefois, dans ce mode de réalisation, la seconde extrémité 9 de chaque ailette présente un rayon par rapport à l'axe A du raccord inférieur au rayon du raccord.

Ainsi, de façon similaire à ce qui a été exposé pour le second mode de réalisation, la bague 2 doit être montée en force sur l'emboîture du raccord 3, ce qui garantit d'une part un maintien en position de la bague 2 sur l'emboîture du raccord 3, et d'autre part permet d'obtenir une légère inclinaison des ailettes 7 en direction de l'évidement 6, la bague 2 étant introduite sur l'emboîture du raccord 3 par son extrémité opposée aux évidements 12, cette disposition facilitant le déplacement de l'ailette 7 vers l'évidement 12, lors du sertissage.

Avantageusement, la bague 2 est réalisée dans un matériau permettant de se déformer lors du sertissage de façon à former au niveau des interstices entre les mâchoires de l'outil des accumulations de matière sous forme de languettes plates 13, comme illustré de façon schématique sur la figure 10, ces languettes 13 pouvant être brisée ultérieurement par l'utilisateur.

Il est à signaler que, pour les modes de réalisation dans lesquels la bague n'est pas montée en force sur l'emboîture du raccord, il est possible de réaliser un bossage à l'extrémité de l'emboîture, après introduction de la bague par exemple, pour garantir le maintien en position de la bague sur le raccord, le bossage formant au moins une butée sur la surface extérieure du raccord empêchant la perte de la bague.

Comme il va se soi, l'invention ne se limite pas aux formes de réalisation préférentielle décrite ci-dessus, à titre d'exemple non limitatif ; elle en embrasse au contraire toutes les variantes de réalisation dans le cadre des revendications ci-après.

## Revendications

1. Bague (2) de visualisation du sertissage d'un raccord (3) pour tubes (4), comportant une portion annulaire (5) présentant au moins un évidement (6, 12) laissant apparaître le corps du raccord (3), ainsi qu'au moins une ailette (7) située en regard dudit évidement (6, 12), l'au moins une ailette (7) comportant une première extrémité (8) reliée à la portion annulaire (5) et située à distance du raccord (3), que l'au moins une ailette (7) comporte une seconde extrémité (9) : **caractérisé en ce que** située à proximité du corps du raccord (3), de façon à ce que l'au moins une ailette (7) soit déplacée par l'outil de sertissage lors de l'opération de sertissage du raccord, de façon à obturer au moins partiellement l'évidement (6, 12) correspondant.

2. Bague (2) selon la revendication 1, **caractérisée en ce que** les évidements (6) sont ouverts sur un bord de la portion annulaire (5).

3. Bague (2) selon la revendication 2, **caractérisé en ce que** le bord de la portion annulaire sur lequel sont ouverts les évidements (6) forme un ensemble de créneaux avant sertissage.

4. Bague (2) selon la revendication 1, **caractérisée en ce que** les évidements (12) sont fermés.

5. Bague (2) selon l'une des revendications 1 à 4, **caractérisée en ce que** la première extrémité (8) de l'au moins une ailette (7) comporte un chanfrein (10) favorisant son déplacement dans une direction donnée par rapport au corps du raccord lors du sertissage.

6. Bague (2) selon l'une des revendications 1 à 5, **caractérisée en ce que** la seconde extrémité (9) de l'ailette (7) présente un rayon, par rapport à l'axe (A) du raccord, inférieur au rayon du raccord (3), la bague (2) pouvant être montée en force sur le raccord.

7. Bague (2) selon l'une des revendications 1 à 6, **caractérisé en ce qu'**elle est réalisée dans un matériau lui permettant de se déformer lors du sertissage de façon à former, au niveau des interstices entre les mâchoires de l'outil de sertissage, des accumulations de matière sous forme d'au moins une languette plate (13), pouvant être brisée ultérieurement par l'utilisateur afin d'enlever la bague (2) du raccord (3).

8. Bague (2) selon l'une des revendications 1 à 7, **caractérisée en ce qu'**elle comporte au moins deux ailettes (7) et deux évidements (6, 12) répartis de façon régulière sur la périphérie de la bague (2).

9. Bague (2) selon la revendication 8, **caractérisée en ce qu'**elle comporte au moins quatre ailettes (7) et quatre évidements (6, 12) correspondants.

10. Raccord (3) à sertir pour tube (4) comportant au moins une bague (2) selon l'une des revendications 1 à 9.

## Claims

1. Ring (2) for visual indication of the crimping of a coupling (3) for tubes (4), comprising an annular portion (5) exhibiting at least one recess (6, 12) revealing the body of the coupling (3), and at least one fin (7) situated facing the said recess (6, 12), the at least one fin (7) comprising a first end (8) connected to the annular portion (5) and situated at a distance from the coupling (3), **characterised in that** the at least one fin (7) comprises a second end (9) situated near the body of the coupling (3), so that the at least one fin (7) is displaced by the crimping tool during the coupling crimping operation, so as to at least partially close off the corresponding recess (6, 12).

2. Ring (2) according to Claim 1, **characterised in that** the recesses (6) are open on one edge of the annular portion (5).

3. Ring (2) according to Claim 2, **characterised in that** the edge of the annular portion on which the recesses (6) are open forms a set of crenellations prior to crimping.

4. Ring (2) according to Claim 1, **characterised in that** the recesses (12) are closed.

5. Ring (2) according to one of Claims 1 to 4, **characterised in that** the first end (8) of the at least one fin (7) comprises a chamfer (10) encouraging its displacement in a given direction with respect to the body of the coupling during crimping.

6. Ring (2) according to one of Claims 1 to 5, **characterised in that** the second end (9) of the fin (7) has a radius, with respect to the axis (A) of the coupling, smaller than the radius of the coupling (3), it being possible for the ring (2) to be forcibly fitted onto the coupling.

7. Ring (2) according to one of Claims 1 to 6, **characterised in that** it is made of a material allowing it to deform during crimping in such a way as to form, at the gaps between the jaws of the crimping tool, accumulations of material in the form of at least one flat tab (13), which can be broken subsequently by the user so as to remove the ring (2) from the coupling (3).

8. Ring (2) according to one of Claims 1 to 7, **characterised in that** it comprises at least two fins (7) and two recesses (6, 12) distributed uniformly about the periphery of the ring (2).

9. Ring (2) according to Claim 8, **characterised in that** it comprises at least four fins (7) and four corresponding recesses (6, 12).

10. Coupling (3) to be crimped for a tube (4), comprising at least one ring (2) according to one of Claims 1 to 9.

## Patentansprüche

1. Ring (2) zum visuellen Anzeigen der Verpressung einer Kupplung (3) für Rohre (4), mit einem ringförmigen Teil (5), der mindestens eine Aussparung (6, 12) aufweist, die den Körper der Kupplung (3) sichtbar läßt, sowie mindestens einem Flügel (7), welcher der Aussparung (6, 12) gegenüberliegt, wobei der mindestens eine Flügel (7) ein erstes Ende (8) aufweist, das mit dem ringförmigen Teil (5) verbunden und von der Kupplung (3) beabstandet ist,
**dadurch gekennzeichnet,**
**daß** der mindestens eine Flügel (7) ein zweites Ende (9) aufweist, das nahe dem Körpers der Kupplung (3) angeordnet ist, so daß der mindestens eine Flügel (7) bei dem Arbeitsschritt des Verpressens der Kupplung durch das Verpreßwerkzeug so verschoben wird, daß er die entsprechende Aussparung (6, 12) zumindest teilweise ausfüllt.

2. Ring (2) nach Anspruch 1,
**dadurch gekennzeichnet,**
**daß** die Aussparungen (6) an einer Kante des ringförmigen Teils (5) offen sind.

3. Ring (2) nach Anspruch 2,
**dadurch gekennzeichnet,**
**daß** die Kante des ringförmigen Teils, an der die Aussparungen (6) offen sind, vor dem Verpressen eine zinnenähnliche Gesamtanordnung darstellt.

4. Ring (2) nach Anspruch 1,
**dadurch gekennzeichnet,**
**daß** die Aussparungen (12) geschlossen sind.

5. Ring (2) nach einem der Ansprüche 1 bis 4,
**dadurch gekennzeichnet,**
**daß** das erste Ende (8) des mindestens einen Flügels (7) eine Abschrägung (10) aufweist, die beim Verpressen seine Verschiebung in einer vorgegebenen Richtung in Bezug auf den Körper der Kupplung begünstigt.

6. Ring (2) nach einem der Ansprüche 1 bis 5,
**dadurch gekennzeichnet,**
**daß** das zweite Ende (9) des Flügels (7) in Bezug auf die Achse (A) der Kupplung einen Radius aufweist, der kleiner als der Radius der Kupplung (3) ist, so daß der Ring (2) durch Krafteinwirkung auf der Kupplung montiert werden kann.

7. Ring (2) nach einem der Ansprüche 1 bis 6,
**dadurch gekennzeichnet,**
**daß** er aus einem Material besteht, das es ihm ermöglicht, sich beim Verpressen so zu verformen, daß er an den Zwischenräumen zwischen den Backen des Verpreßwerkzeugs Materialansammlungen in Form von mindestens einer flachen Zunge (13) bildet, welche später von dem Anwender abgebrochen werden können, um den Ring (2) von der Kupplung (3) abzunehmen.

8. Ring (2) nach einem der Ansprüche 1 bis 7,
**dadurch gekennzeichnet,**
**daß** er mindestens zwei Flügel (7) und zwei Aussparungen (6, 12) aufweist, die gleichmäßig über den Umfang des Rings (2) verteilt sind.

9. Ring (2) nach Anspruch 8,
**dadurch gekennzeichnet,**
**daß** er mindestens vier Flügel (7) und vier entsprechende Aussparungen (6, 12) aufweist.

10. Verpreßbare Kupplung (3) für ein Rohr (4),
welche mindestens einen Ring (2) nach einem der Ansprüche 1 bis 9 aufweist.
